(19) **Europäisches Patentamt / European Patent Office / Office européen des brevets**

(11) **EP 3 657 217 B1**

(12) # FASCICULE DE BREVET EUROPEEN

(45) Date de publication et mention de la délivrance du brevet:
**06.12.2023 Bulletin 2023/49**

(21) Numéro de dépôt: **19206135.6**

(22) Date de dépôt: **30.10.2019**

(51) Classification Internationale des Brevets (IPC):
**G01S 17/95** (2006.01)   **G01S 17/58** (2006.01)
**F03D 17/00** (2016.01)

(52) Classification Coopérative des Brevets (CPC):
**G01S 17/58; F03D 17/00; G01S 17/95;**
F05B 2270/8042; Y02A 90/10; Y02E 10/72

(54) **PROCÉDÉ D'ACQUISITION ET DE MODÉLISATION PAR UN CAPTEUR LIDAR D'UN CHAMP DE VENT INCIDENT**

ERFASSUNGS- UND MODELLIERUNGSVERFAHREN EINES UMGEBUNGSWINDFELDS DURCH EINEN LIDAR-SENSOR

METHOD FOR ACQUIRING AND MODELLING AN AMBIENT WIND FIELD BY A LIDAR SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.11.2018 FR 1871844**

(43) Date de publication de la demande:
**27.05.2020 Bulletin 2020/22**

(73) Titulaire: **IFP Energies nouvelles**
**92852 Rueil-Malmaison Cedex (FR)**

(72) Inventeurs:
• **GUILLEMIN, Fabrice**
**92852 RUEIL-MALMAISON CEDEX (FR)**
• **NGUYEN, Hoai-Nam**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2015 304 634**

• **ADCOCK CHRISTIANE ET AL: "Data-Driven Wind Farm Optimization Incorporating Effects of Turbulence Intensity", 2018 ANNUAL AMERICAN CONTROL CONFERENCE (ACC), AACC, 27 juin 2018 (2018-06-27), pages 695-700, XP033384550, DOI: 10.23919/ACC.2018.8431727**
• **CHRISTOPHE LEYS ET AL: "Detecting outliers: Do not use standard deviation around the mean, use absolute deviation around the median", JOURNAL OF EXPERIMENTAL SOCIAL PSYCHOLOGY, vol. 49, no. 4, 1 juillet 2013 (2013-07-01), pages 764-766, XP055461381, AMSTERDAM, NL ISSN: 0022-1031, DOI: 10.1016/j.jesp.2013.03.013**
• **BALTENSWEILER ANDRI ET AL: "Terrestrial laser scanning improves digital elevation models and topsoil pH modelling in regions with complex topography and dense vegetation", ENVIRONMENTAL MODELLING & SOFTWARE, ELSEVIER, AMSTERDAM, NL, vol. 95, 5 juin 2017 (2017-06-05), pages 13-21, XP085142546, ISSN: 1364-8152, DOI: 10.1016/J.ENVSOFT.2017.05.009**
• **F. GUILLEMIN ET AL: "Nacelle LiDAR online wind field reconstruction applied to feedforward pitch control", JOURNAL OF PHYSICS: CONFERENCE SERIES, vol. 753, 1 septembre 2016 (2016-09-01), page 052019, XP055451670, GB ISSN: 1742-6588, DOI: 10.1088/1742-6596/753/5/052019**

EP 3 657 217 B1

**Description**

**Domaine technique**

La présente invention concerne le domaine des capteurs LiDAR (Light Détection And Ranging ou détection et localisation par la lumière) utilisés comme moyen de télédétection pour mesurer la vitesse du vent. Elle concerne également le domaine des éoliennes équipées de capteur LiDAR, ainsi que le contrôle de celles-ci.

**Technique antérieure**

La détection des valeurs aberrantes est universelle pour de nombreuses tâches de traitement de données, couvrant un large éventail de domaines tels que le traitement du signal, le contrôle industriel, etc. Une bonne définition d'une valeur aberrante est une mesure qui s'écarte tellement des autres mesures que la suspicion que de celle-ci est provoquée par un mécanisme différent.

Dans le domaine de l'énergie éolienne, au cours des dernières années, la détection et l'observation de la lumière à l'aide de Lidar sont apparues comme une technologie de télédétection fiable et réalisable pour la mesure de la vitesse du vent et la prévision de la vitesse du vent.

En effet les progrès récents de la technologie Lidar facilitent le déploiement des Lidars pour les applications de contrôle en temps réel. Les Lidars peuvent fournir des mesures qui caractérisent le flux de vent en amont à des résolutions spatiales et temporelles élevées. La demande de brevet FR 3013777 (US 2015145253) décrit une telle application. Pour les Lidars, les mesures qui s'écartent sensiblement du schéma normal des données détectées sont considérées comme des valeurs aberrantes. Ces valeurs aberrantes peuvent être causées par des erreurs de capteur ou de transmission de données.

Les prédictions de vent liées aux mesures dépendent fortement de la qualité des mesures du Lidar. Comme les données aberrantes sont inévitables pour ces données de mesure du Lidar, y compris les données erronées générées pour des raisons telles que des dysfonctionnements d'appareils ou des données valables représentant des modèles extraordinaires tels que des conditions météorologiques défavorables, les prédictions sont impactées et souvent non optimales.

De plus la reconstruction du champ de vent comprend l'estimation de la vitesse du vent et de l'intervalle de confiance, et en général, les deux reposent sur la qualité de la mesure du Lidar.

Par conséquent, la détection de valeurs aberrantes donne un aperçu précieux pour soutenir l'application des données Lidar.

Motivée par le désir de récupérer plus d'informations utiles à partir des données du Lidar, l'invention vise à pallier aux inconvénients mentionnés précédemment et à développer une méthode permettant de supprimer les valeurs aberrantes en temps réel. L'approche est validée pour les systèmes Lidar montés sur nacelles avec des données de mesure réelles. Le document ADCOCK CHISTIANE et al. : « Data-driven wind farm optimization incorparating effects of turbulence intensité », 2018 ANNUAL AMERICAN CONTROL CONFERENCE (ACC), AACC, 27/06/2018, pages 695-700, décrit une optimisation des données de mesure.

**Résumé de l'invention**

A cet effet un premier aspect de l'invention concerne un procédé de détection de valeurs aberrantes d'un champ de vent incident dans un espace situé en amont d'un capteur LiDAR, et le procédé se caractérise en ce qu'il comprend: a) Une étape d'acquisition et de modélisation de mesure $rws(k)$ par le capteur LiDAR d'un champ de vent incident ; b) Une étape d'estimation d'une médiane $m_r(k)$ et de l'écart absolu moyen $d_r(k)$ en temps réel de modélisation des mesures rws(k) du champ de vent incident ; c) Une étape de détection des valeurs aberrantes en temps réel en utilisant la médiane estimée $m_r(k)$ et l'écart absolu moyen $d_r(k)$, ladite étape de détection est réalisée par une formule du type : $|rws(k) - m_r(k)| \leq \sigma d_r(k)$ où $\sigma$ est un scalaire positif.

Selon un aspect de l'invention, l'écart absolu moyen dr(k) en temps réel du champ de vent incident est donné par une formule du type:

$$d_r = \frac{1}{n} \sum_{i=1}^{n} |x_i - m(X)|$$

Conformément à une mise en oeuvre de l'invention, le procédé comporte une étape de reconstruction de la mesure dudit capteur LiDAR, par suppression desdites valeurs aberrantes détectées de ladite modélisation de mesure *rws(k).*

Ainsi, on obtient un signal de mesure propre, sans valeurs aberrantes.

Selon un aspect de l'invention, le procédé d'acquisition et de modélisation par un capteur LiDAR d'un champ de vent incident dans un espace situé en amont dudit capteur LiDAR comprend les étapes suivantes :

a) une étape de maillage de l'espace situé en amont dudit capteur LiDAR dans laquelle le maillage de l'espace est réalisé par un ensemble de points discrétisés positionnés selon une grille tridimensionnelle prédéfinie qui comprend un ensemble de mailles composées de points d'estimation et de points de mesure.

L'étape de maillage permet de discrétiser (ou échantillonner) l'espace en amont du capteur LiDAR en une grille tridimensionnelle composée de points discrétisés et de pouvoir faire coïncider ces différents points discrétisés soit en points de mesure soit en points d'estimation nécessaires au procédé de modélisation. Il permet en outre de positionner relativement entre eux les points de mesure et d'estimation et de connaitre les distances séparant l'ensemble de ces points discrétisés.

b) une étape de mesure de l'amplitude et de la direction du vent aux différents points de mesure situés dans l'espace en amont et positionnés à au moins deux distances distinctes du capteur LiDAR, le long d'au moins trois axes de mesure,

Les mesures effectuées dans cette étape permettent d'obtenir des données initiales suffisantes et fiables pour alimenter un algorithme destiné à estimer l'amplitude et la direction du vent sur les points d'estimation.

c) une étape d'estimation de l'amplitude et de la direction du vent à un instant quelconque sur l'ensemble des points d'estimation et l'estimation est effectuée au moyen de l'optimisation par une méthode de moindre carrés récursifs pondérés d'une fonction de coût J qui utilise au moins les données des points mesurés, des données de cohérence spatiale de la vitesse du vent, des données de cohérence temporelle de la vitesse du vent, ainsi que des données qualifiant la qualité des mesures effectuées sur les points de mesure.

La prise en compte de ces différents paramètres dans une fonction de cout à optimiser est ce qui va permettre d'accéder à une estimation de l'amplitude et de la direction du vent sur chaque point d'estimation du maillage.

d) une étape de reconstruction, en temps réel et dans un repère défini, du champ de vent incident en trois dimensions (3D) à partir des amplitudes et des directions du vent estimées et mesurées pour chaque point.

Cette étape permet de reconstruire en 3D dans le volume échantillonné par la grille tridimensionnelle le champ de vent incident. Dans cette étape on réalise un historique des mesures LiDAR ce qui permet de connaître les états passés du champ de vent, et celui-ci est incorporé dans la synthèse des estimations courante et future du champ de vent 3D ce qui permet une reconstruction en temps réel.

L'intérêt d'utiliser une approche par optimisation, utilisant une forme récursive des moindres carrés pondérés, est de pouvoir déterminer une image complète en trois dimensions (3D) du vent incident se propageant dans l'espace situé en amont du capteur LiDAR.

Selon un aspect de l'invention, la mesure m de l'amplitude et de la direction du vent en un point de mesure est donnée par une relation de la forme :

$$m_{j,x}(k) = a_j v_{j,x}(k) + b_j v_{j,y}(k) + c_j v_{j,z}(k)$$

où $v_{j,x}(k)$, $v_{j,y}(k)$, $v_{j,z}(k)$ sont des valeurs de la vitesse du vent projetées sur un repère x, y, z à un temps initial (k), et $a_j$, $b_j$, $c_j$ avec j = 0, 1, 2, 3, 4, sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où $\theta_j$, $\varphi_j$ sont respectivement le zénith et l'azimut de l'axe de mesure dans un système de coordonnée sphérique.

De cette manière le vecteur vent, à chaque instant échantillonné, pour l'ensemble des points de l'espace est composé des trois composantes qui vont permettre de déterminer l'image complète en trois dimensions. En outre le choix des coefficients de mesure permet de ne dépendre que des angles des faisceaux et ne sont pas fonction des distances de mesure ce qui facilite la programmation informatique de la fonction de cout J.

Selon un aspect de l'invention, la fonction de cout *J* à un instant (t) quelconque s'écrit sous la forme suivante :

$$J(t) = (\omega(0) - \hat{\omega}(0))^T P_0^{-1} (\omega(0) - \hat{\omega}(0)) + \sum_{j=1}^{t} (\omega(j) - \omega(j-1))^T Q^{-1} (\omega(j) - \omega(j-1)) +$$

$$+ \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

où w est un vecteur ordonné composé de toutes les composantes de la vitesse des points de l'espace où le vent est estimé, $\hat{\omega}(0)$ est l'estimation de la vitesse du vent au temps 0, $P_0$, $Q$, $R_s$ et $R_m$ sont des matrices de pondération de dimension appropriée, et $C_s$, $C_m$ sont des matrices qui prennent en compte la vitesse du vent et les bruits de mesure.

En utilisant une telle fonction de coût, il est possible d'estimer la vitesse du vent en un point d'estimation. En outre, une telle fonction permet d'avoir une interprétation claire des matrices de pondération $P_0$, $Q$, $R_s$ et $R_m$.

Selon un aspect de l'invention, les mesures de l'amplitude et de la direction du vent aux différents points de mesure s'effectuent à un taux d'échantillonnage d'au moins 0.25Hz. L'utilisation d'une telle plage de fréquences d'échantillonnage a pour effet d'obtenir plusieurs mesures en simultané sur un même axe de mesure tout en ayant des mesures qui soient fiables et précises.

Selon un aspect de l'invention, les mesures de l'amplitude et de la direction du vent aux différents points de mesure sont prises à au moins deux distances différentes le long de l'axe de mesure. Des mesures effectuées à au moins deux distances permettent de définir un volume tridimensionnel suffisant pour englober les pales d'une éolienne comme cela sera décrit par la suite.

Selon un aspect de l'invention, les mesures de l'amplitude et de la direction du vent sont prises le long d'au moins trois axes de mesure. Le fait d'avoir au moins trois axes de mesures permet un maillage fin de l'espace en amont et permet également d'avoir une quantité de mesures suffisante pour l'étape d'estimation de la vitesse du vent.

Selon un aspect de l'invention, la cohérence spatiale de la vitesse du vent suivant des axes x, y et z d'un repère cartésien est estimée par une formule du type :

$$C_s \omega \approx 0$$

$$C_s = \begin{bmatrix} C_l \\ C_t \\ C_v \end{bmatrix}$$

avec où :

○ $C_l$ caractérise la variation de la vitesse du vent pour un domaine d'estimation le long de l'axe longitudinal x et

○ $C_t$ caractérise la variation de la vitesse du vent pour un domaine d'estimation le long de l'axe latéral y et

○ $C_v$ caractérise la variation de la vitesse du vent pour un domaine d'estimation le long de l'axe vertical z et

Une telle caractérisation a pour effet de rendre possible le codage informatique d'une telle fonction.

Selon un aspect de l'invention, la cohérence spatiale de la vitesse du vent suivant les axes x, y et z du repère cartésien est estimée avec les hypothèses suivantes :

○ La variation de la vitesse du vent le long de l'axe longitudinal x est faible et la dérivée partielle $dv_x/dx$ est relativement petite le long de l'axe longitunal,

○ le vent change sans à-coup le long de l'axe latéral y et la dérivée partielle $dv_x/dy$ est petite le long de l'axe latéral y,

○ le vent change avec une loi de puissance suivant l'axe vertical z qui est donnée par :

$$v_l = v_{lr} \left( \frac{z}{z_r} \right)^{\alpha}$$

où $\alpha$ est un exposant de la loi de puissance, $v_l$ est le vent longitudinal à une altitude z au-dessus du sol, et $z_r$ une altitude de référence.

De telles hypothèses sont réalistes et permettent des estimations de vitesses du vent qui sont fiables et précises.

Selon un aspect de l'invention, la qualité des mesures effectuées par le LiDAR est représentée par un modèle de la forme :

$$C_m \omega = m_m + \epsilon_m$$

où $E_m$ décrit les bruits de mesure.

La formulation de ce type permet de prendre en compte les inexactitudes des mesures du LiDAR.

Selon un aspect de l'invention, l'estimation des amplitudes et des directions du champ de vent à un instant (t) sur l'ensemble des points d'estimation est donnée par la formule suivante :

$$\omega(t) = \omega(t-1) + K(y(t) - C\omega(t-1))$$

La formule précédente a pour intérêt de relier les estimations de la vitesse du vent dans le temps pour les points d'estimation.

L'invention concerne également un produit programme d'ordinateur qui comprend des instructions de code agencées pour mettre en oeuvre les étapes du procédé de détection de valeurs aberrantes précédemment décrit. Le programme est exécuté sur une unité de traitement du LiDAR.

L'invention concerne aussi un capteur LiDAR qui comprend en mémoire les instructions de code d'un produit programme d'ordinateur tel que décrit précédemment et qui est agencé pour exécuter un tel produit programme d'ordinateur.

De cette manière, un capteur LiDAR qui exécute un tel produit programme d'ordinateur renverra une information fiable d'un champ de vent incident en trois dimensions et en temps réel.

Un objet de l'invention concerne également une éolienne qui comprend un capteur LiDAR tel que décrit précédemment.

Selon un aspect de l'invention, le capteur LiDAR est disposé sur la nacelle de ladite éolienne.

Enfin, l'invention concerne également un procédé de contrôle et/ou de surveillance d'une éolienne équipée d'un capteur LiDAR et un automate de pilotage, et le procédé comprend les étapes suivantes :

a) Une étape d'élaboration d'une stratégie de contrôle par anticipation de ladite éolienne en exploitant la détection de valeurs aberrantes issue de la reconstruction du champ de vent incident en trois dimensions et en temps réel,
b) Une étape de pilotage intégrant la stratégie de contrôle élaborée qui consiste à piloter l'angle des pâles ou l'orientation de la nacelle.

De cette manière la mise à disposition d'une information suffisamment robuste et précise de l'état de vent incident en approche du rotor, permet une nouvelle approche de contrôle, avec l'intégration d'un terme de pré-positionnement dynamique et préventif. En outre, la capacité de reconstruire en ligne, en temps réel, un champ de vent incident en approche du plan rotor ouvre de nombreuses perspectives d'exploitation : quantification du désalignement de l'éolienne, courbe de puissance, fonction de transfert de la nacelle, détection de rafales, surveillance et diagnostic du chargement et des risques de fatigue, optimisation de la maintenance préventive, analyse de la ressource, optimisation de la production. Ceci permet alors d'augmenter le rendement des éoliennes, de réduire les coûts de maintenance, d'augmenter la durée de vie des composants et de réduire les coûts d'investissement en optimisant le design.

**Liste des figures**

D'autres caractéristiques et avantages du procédé selon l'invention, apparaîtront à la lecture de la description ci-après d'un exemple non limitatif de réalisation, en se référant aux figures annexées et décrites ci-après.

[Fig 1]

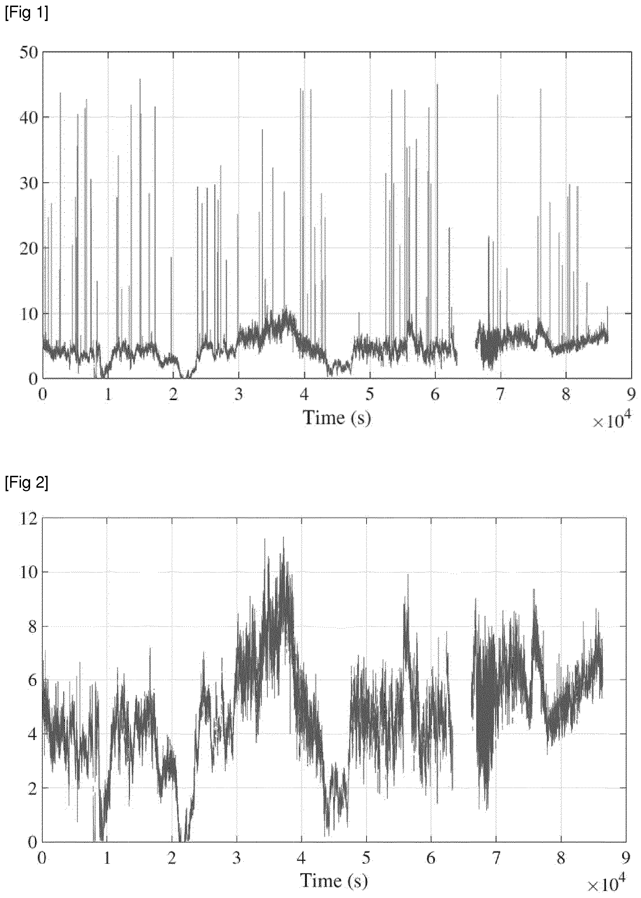

La figure 1 illustre des mesures du Lidar pour un faisceau et pour une journée.
[Fig 2]
La figure 2 illustre des mesures du Lidar après avoir enlevé les valeurs aberrantes pour un faisceau et pour une journée.
[Fig 3]

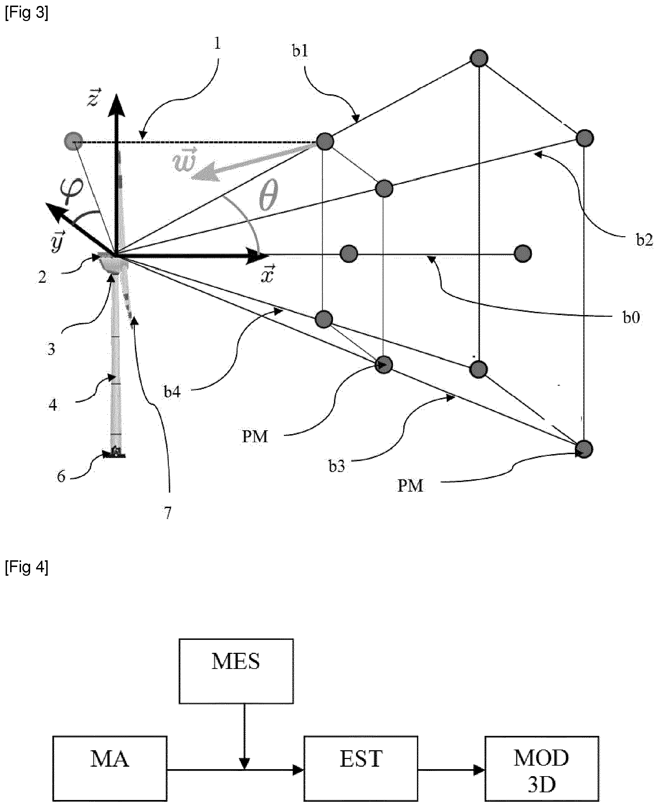

La figure 3 illustre une éolienne équipée d'un capteur LiDAR selon l'invention.

[Fig 4]

La figure 4 illustre les étapes du procédé d'acquisition et de modélisation par le capteur LiDAR selon l'invention.

[Fig 5]

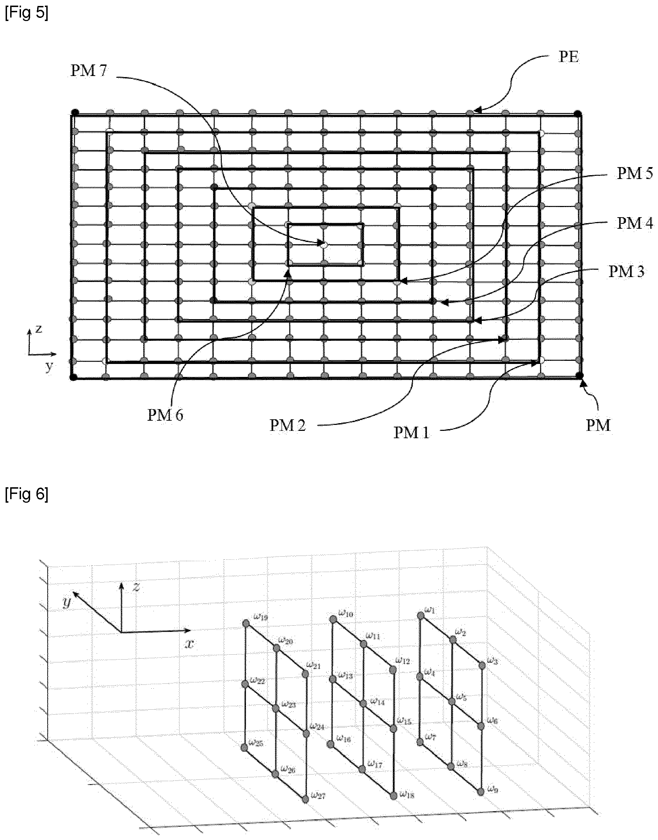

La figure 5 est une vue de face du maillage de l'espace selon l'invention.

[Fig 6]

La figure 6 est une vue en perspective du maillage de l'espace selon l'invention.

[Fig 7]

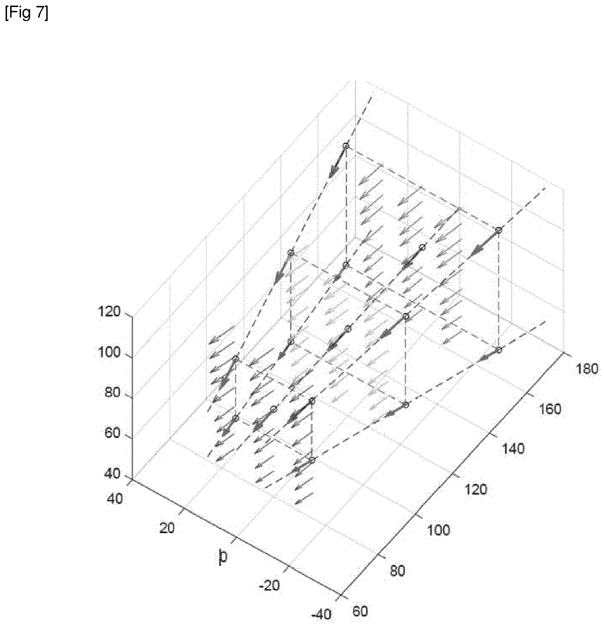

La figure 7 illustre un champ de vent en 3D reconstruit à partir des mesures du LiDAR dans un cas particulier.

[Fig 8]

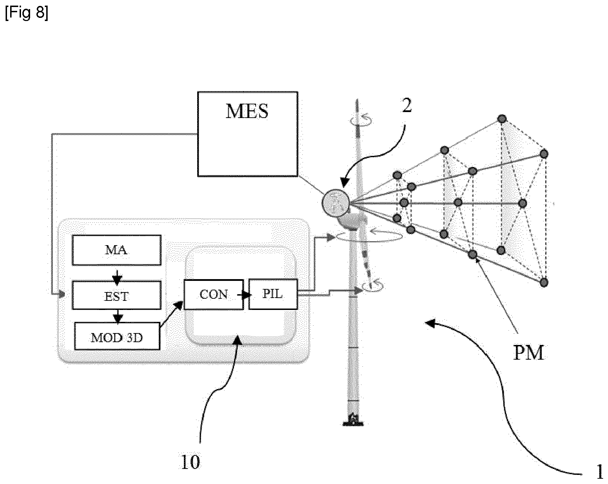

La figure 8 illustre les étapes du procédé de pilotage de l'éolienne selon l'invention.

**Description des modes de réalisation**

Notations

Au cours de la description, les notations suivantes sont utilisées :

*x, y, z* : directions du repère tridimensionnel, avec z l'axe vertical et x la direction principale du vent.

$\Theta$ et $\varphi$ : angles d'orientation dudit capteur LiDAR. Ces angles sont explicités sur la figure 1 : l'angle $\theta$ est l'angle fait par la projection de l'axe de mesure du LiDAR dans le plan (*y, z*), et $\varphi$ est l'angle fait par la projection de l'axe de mesure du LiDAR dans un plan constitué de l'axe *x* et de la projection de l'axe de mesure du LiDAR dans le plan (*y, z*).

m(t) : mesure du capteur LiDAR à un point de mesure.

$V_{j,x}(k)$, $v_{j,y}(k)$, $v_{j,z}(k)$ : projections de la vitesse du vent sur *x, y, z.*

w : vecteur ordonné composé de toutes les composantes de la vitesse du vent aux points de l'espace où le vent est estimé sur les axes *x, y* et *z* du repère tridimensionnel.

$\hat{\omega}(t)$ : estimation de $\omega(t)$ à l'instant t.

P(t) : matrice auxiliaire variable dans le temps, qui peut être obtenue à l'instant t. $P_0$, $Q$, $R_s$ et $R_m$ sont des matrices de pondération de dimension appropriée.

$\Sigma$ est un scalaire positif.

*Rp* : vecteur

*mr(k)* : médiane

Dans la suite de la description, le terme « LiDAR » est utilisé pour désigner un capteur « LiDAR ».

Une méthode de détection des valeurs aberrantes en temps réel est proposée sur la base d'une estimation en ligne de la médiane et de l'écart absolu moyen. La méthode proposée est validée en utilisant des données réelles de mesure du Lidar, montrant que les valeurs aberrantes peuvent être détectées et doivent être supprimées des mesures du Lidar.

Un Lidar nacelle pulsé, à 5 faisceaux (comme visible à la figure 3) mesure la composante de la vitesse du vent qui correspond à la vitesse du vent projetée dans la direction du faisceau laser, à partir du faisceau b0, puis du faisceau b1, du faisceau b2, du faisceau b3 et enfin faisceau b4. Une caractéristique intéressante du Lidar est qu'il peut mesurer la projection de la vitesse du vent à plusieurs distances le long de chaque faisceau, par exemple de 50 à 200m, à un taux d'échantillonnage de 4 Hz. A chaque temps d'échantillonnage, seules les mesures d'un faisceau peuvent être obtenues.

Comme visible à la figure 1, qui montre les mesures du lidar pour un faisceau et pour une journée dans le cas où la méthode de détection n'est pas utilisée, on remarque que le Lidar ne fournit pas de mesures tout le temps (en effet le phénomène peut être observé pendant l'intervalle de temps entre [$6 \times 10^4$; $7 \times 10^4$]), et que à plusieurs instants, les mesures Lidar s'écartent significativement du schéma normal. Ces mesures sont considérées comme des valeurs aberrantes.

Comme indiqué dans l'introduction, l'objectif de l'invention est de détecter et de supprimer les valeurs aberrantes des mesures du Lidar.

Pour se faire une première étape du procédé de détection des valeurs aberrantes en temps réel consiste en une étape d'acquisition et de modélisation de mesure rws(k) par le capteur Lidar d'un champ de vent incident. Cette étape sera plus détaillée dans la suite de la description.

Une seconde étape réalisée par le Lidar consiste à estimer la médiane et l'écart absolu moyen en temps réel des mesures du Lidar qui seront utilisées ultérieurement pour la détection des valeurs aberrantes.

En statistique, la médiane est la valeur séparant la moitié inférieure de la moitié supérieure d'un échantillon de données. Pour un ensemble de données, il peut être considéré comme la valeur intermédiaire. Par exemple, dans un ensemble de données {1, 3, 3, 6, 7, 8, 9}, la médiane est de 6, le quatrième plus grand et le quatrième plus petit nombre de l'échantillon. Le principal avantage de la médiane dans la description des données par rapport à la moyenne est qu'elle n'est pas faussée par des valeurs extrêmement grandes ou petites, ce qui peut donner une meilleure idée de la valeur typique. En d'autres termes, la médiane est beaucoup plus robuste par rapport aux valeurs aberrantes que la moyenne. Dans le cas de données symétriques, la moyenne et la médiane sont égales.

L'invention comprend une procédure de calcul de la médiane des données de mesures du Lidar $2nm +1$.

Dans l'exemple suivant visible aux figures 1 et 3, on considère seulement une mesure d'un faisceau pour une distance. Cependant, l'approche s'étend directement à tous les faisceaux et à toutes les distances.

Le procédé de détection comprend un algorithme qui consiste en une estimation de la médiane en temps réel. A cet effet, les données utilisées sont listées comme suit :

Paramètre : Nombre de données $2nm + 1$
Entrée : Mesures du Lidar $rws(k)$
Sortie : Médiane $mr(k)$
Initialisation : $j = 1$

L' algorithme fonctionne de la manière suivante à chaque instant k :

1. Si $j \leq 2nm + 1$

    a) $rp(j) = rws(k)$

    b) $j = j + 1$

    c) Aller à 1.

2. Autre cas :

    a) $rp(1 : 2nm) = rp(2 : 2nm + 1)$

    b) $rp(2nm + 1) = rws(k)$

    c) Trier le vecteur $rp$ dans l'ordre croissant.

3. La médiane $mr(k)$ est calculée comme $mr(k) = rp(nm)$.

Cet algorithme nécessite uniquement les opérations de stockage et de tri, qui sont extrêmement simples.

Pour le problème de détection des valeurs aberrantes, nous devons également estimer l'écart absolu moyen. En mathématiques, l'écart absolu moyen d'un ensemble de données est la moyenne des écarts absolus par rapport à un point central, c'est-à-dire pour un ensemble $X = \{x1, x2, ..., xn\}$, l'écart absolu moyen est calculé comme :

$$d_r = \frac{1}{n}\sum_{i=1}^{n}|x_i - m(X)|$$

Le point central m(X) peut être la moyenne, la médiane ou le mode. Pour la raison de la robustesse par rapport aux valeurs aberrantes, la médiane mr(k) est choisie comme m(X).

L'écart absolu moyen est une mesure utilisée pour quantifier la quantité de variation ou de dispersion d'un ensemble de valeurs de données. Un écart absolu faible indique que les points de données ont tendance à être proches du point central de l'ensemble, tandis qu'un écart absolu élevé indique que les points de données sont répartis sur une gamme de valeurs plus large. Le principal avantage de l'écart absolu moyen par rapport à l'écart-type est qu'il est beaucoup plus robuste que l'écart-type par rapport aux valeurs aberrantes.

Dans la suite, un algorithme de calcul de l'écart absolu moyen des données de mesures $nd$. Lidar précédentes est proposé. Pour plus de simplicité, seule une mesure d'un faisceau pour une distance est considérée.

A cet effet, les données utilisées par l'algorithme sont listées comme suit :

Paramètre : Nombre de données *np*
Entrée : Mesure du Lidar rws(k)
Sortie : L'écart absolu moyen *dr(k)*
Initialisation : j = 1
À chaque instant k :

    1. Si $j \leq np$

        a) *dp(j) = rws(k)*
        b) *j = j + 1*
        c) Go to 1.

    2. Autre

        a) *dp(1 : np - 1) = dp(1 : np)*
        b) *dp(np) = rws(k)*

    3. On utilise l'algorithme d' estimation de la médiane en temps réel pour estimer la médiane *mr(k)*.
    4. L'écart absolu moyen *dr(k)* est calculée comme

$$d_r(k) = \frac{1}{n_p} \sum_{i=1}^{n_p} |d_p(i) - m_r(k)|$$

Dans cette section, une procédure pour détecter les valeurs aberrantes en temps réel est proposée en utilisant la médiane estimée mr(k) et l'écart absolu moyen estimé dr(k).Rappelons que la médiane peut être vue comme la valeur milieu, grâce à quoi l'écart absolu moyen dr(k) quantifie la quantité de variation ou d'une dispersion d'un ensemble de valeurs de données.

Afin de détecter les valeurs aberrantes, on suppose que les mesures du Lidar rws(k) ne peuvent pas changer si rapidement, c'est-à-dire la différence |rws(k)-mr(k)| est petite. Plus précisément, on suppose que :

$$|rws(k) - m_r(k)| \leq \sigma d_r(k)$$

où σ est un scalaire positif.

De cette manière, toutes les mesures du Lidar qui ne sont pas satisfaites par l'équation précédentes sont considérées comme des valeurs aberrantes.

Ainsi le procédé de détection des valeurs aberrantes est compris dans un algorithme de détection des valeurs aberrantes qui est résumé comme suit. :

Les paramètres de cet algorithme sont :

Entrée : Mesure du Lidar rws(k)
Sortie : Détecter si rws(k) est une valeur aberrante ou non.
Ainsi à chaque instant k l'algorithme effectue les opérations suivantes :

    1. Utiliser l'algorithme pour estimer la médiane mr(k).
    2. Utiliser l'algorithme pour estimer l'écart absolu moyen dr(k).
    3. Si |rws(k) - mr(k)| ≤ σ dr(k), alors rws(k) n'est pas une valeur aberrante.
    Il peut être utilisé pour un algorithme de reconstruction de champ de vent.
    4. Autre : rws(k) est une valeur aberrante.

Conformément à une mise en oeuvre de l'invention, le procédé comporte une étape de reconstruction de la mesure dudit capteur LiDAR, par suppression desdites valeurs aberrantes détectées de ladite modélisation de mesure *rws(k).*

Ainsi, on obtient un signal de mesure propre, sans valeurs aberrantes.

La figure 4 représente les différentes étapes du procédé d'acquisition et de modélisation selon un mode de réalisation de l'invention : D'autres variantes de réalisation de l'acquisition et la modélisation connues de l'homme du métier sont adaptées au procédé selon l'invention.

    1. Maillage (MA) de l'espace situé en amont dudit capteur LiDAR, le maillage comprend des points d'estimation (PE) et des points de mesure (PM).
    2. Mesure (MES) de l'amplitude et de la direction du vent aux différents points de mesure (PM).
    3. Estimation (EST) de l'amplitude et de la direction du vent à un instant (t) quelconque pour l'ensemble des points d'estimation (PE).
    4. Reconstruction (MOD 3D) du champ de vent incident en trois dimensions (3D) et en temps réel sur l'ensemble des points discrétisés.

La figure 3 représente une éolienne 1 équipée d'un capteur LiDAR 2. Le capteur LiDAR 2 est utilisé pour mesurer la vitesse du vent à une distance donnée sur un point de mesure PM. La connaissance en avance de la mesure de vent permet à priori de donner beaucoup d'informations.

Il existe plusieurs types de capteur LiDAR, par exemple les capteurs LiDAR scannés, LiDAR continu ou LiDAR pulsés. Dans le cadre de l'invention, on utilise de préférence un LiDAR pulsé. Cependant les autres technologies de LiDAR peuvent être utilisées tout en restant dans le cadre de l'invention. Comme visible à la figure 1, qui est un exemple de réalisation, le LiDAR utilisé comporte 5 faisceaux ou axes de mesures (b0, b1, b2, b3, b4). De manière non limitative, le procédé d'acquisition et de modélisation fonctionne également avec un LiDAR comportant trois faisceaux ou plus. Le capteur LiDAR pulsé 5 faisceaux est monté sur une nacelle 3 d'éolienne 1.

Classiquement une éolienne 1 permet de transformer l'énergie cinétique du vent en énergie électrique ou mécanique. Pour la conversion du vent en énergie électrique, elle se compose des éléments suivants :

- un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;

- une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boite de vitesse et d'arbre mécanique) à une machine électrique (générateur électrique...) (non représentés) qui convertit l'énergie recueillie en énergie électrique. Le rotor est potentiellement doté de systèmes de contrôle tels que des pâles à angle variable ou des freins aérodynamiques ;

- une transmission, composée de deux axes (arbre mécanique du rotor et arbre mécanique de la machine électrique) reliés par une transmission (boite de vitesse) (non représentés).

Dans la description exposée ci-après, le procédé d'acquisition et de modélisation décrit est théorique et fonctionne indépendamment de l'éolienne 1. Cependant les différents exemples et développements sont donnés dans le cas d'un LiDAR monté sur la nacelle 3 de l'éolienne 1 de manière à réaliser les différentes étapes du procédé d'acquisition et de modélisation représentées à la figure 4 à une certaine altitude par rapport au sol 6.

Dans cette partie, les différentes étapes du procédé d'acquisition et de modélisation selon l'invention sont décrits :

## 1. Maillage (MA) de l'espace situé en amont dudit capteur LiDAR

Dans cette première étape, l'espace en amont du capteur LiDAR est défini selon un maillage comme visible aux figures 3, 5 et 6. Dans cette étape un système de coordonnées dans lequel le Lidar effectue des mesures est défini. Le système de coordonnées défini est le trièdre direct illustré sur les figures 3 et 5. Les origines x - y de ce système sont au niveau du positionnement du LiDAR sur la nacelle 3, et l'origine z est au niveau du sol 6.

L'axe x pointe horizontalement dans la direction du vent, l'axe z pointe verticalement vers le haut et l'axe y est perpendiculaire pour former un repère tridimensionnel direct (conformément à la règle de la main droite).

Dans cette étape, le maillage de l'espace comprend un ensemble de points discrétisés placés en amont et qui définissent une grille tridimensionnelle. Pour chaque distance x fixée, le plan y - z est divisé en cellules sans chevauchement comme visible sur la figure 5. Le maillage comprend des points de mesure (PM) et des points d'estimations (PE) de la vitesse du vent.

En lien avec ce maillage de l'espace, on définit également des variables sous-jacentes, dites variables d'optimisation, nécessaires à l'étape d'estimation décrite ci-dessous. Afin de permettre une implémentation astucieuse et efficace de l'algorithme d'optimisation décrit plus bas, on rassemble toutes les variables d'optimisation dans un vecteur ordonné, noté $\omega$. L'ordre déterminé pour ces variables d'optimisation est un élément d'ingénierie crucial pour la faisabilité et la performance d'un algorithme de codage de ce procédé.

Un vecteur w est défini pour chaque point de l'espace discrétisé et il est composé de toutes les composantes $v_x$ des points de l'espace (PE) où le vent est estimé, suivies respectivement par les composantes $v_y$ et $v_z$. L'estimation de la vitesse du vent en n points implique la construction d'un vecteur $\omega$ de taille 3n, avec $W_l$ à $W_n$ contenant tous les $v_x$, $W_{n+1}$ à $W_{2n}$ contenant tous les $v_y$, et $W_{2n+1}$ à $W_{3n}$ contenant tous les $v_z$.

L'exemple suivant est donné pour les composantes $v_x$ de la vitesse du vent, étant entendu que la méthode est identique pour $v_y$ et $v_z$. Comme cela a été réalisé dans l'étape initiale, et comme visible sur la figure 5, l'espace est discrétisé en $x$, $y$ et $z$ avec $n_x$ points en x, $n_y$ points en y et $n_z$ points en z.

Dans cette configuration on a :

$$n = n_x n_y n_z$$

On définit par $v_{i,j,k}$ la composante de la vitesse du vent $v_x$, dont la coordonnée est $(x_i, y_j, z_k)$. L'indice $l$ de $W_l$, où se situe l'estimation correspondante, s'obtient ainsi :

$$l = (n_x - i)n_y n_z + (k - 1)n_y + j$$

Par exemple, si i = $n_x$, k = 1 et j = 1, alors

$$l = (n_x - i)n_y n_z + (k - 1)n_y + j = 1$$

Cela correspond au coin supérieur gauche du domaine d'estimation, à la distance la plus éloignée en amont du plan rotor, comme illustré sur la figure 6.

2. Mesure (MES) de l'amplitude et de la direction du vent à différents points de mesure

Dans un second temps, le capteur LiDAR réalise une mesure m(t) relative à la vitesse du vent en un point de mesure (PM) situé en amont de l'éolienne 1. Cette mesure m(t) correspond au signal reçu par le capteur en provenance du point de mesure (PM) en réponse au signal émis par le capteur LiDAR. En effet, par interférométrie et effet Doppler, une partie de signal Laser émis par le capteur LiDAR est réfléchi par les molécules d'air au point de mesure et également par les aérosols, (poussières et microparticules en suspension). Le point de mesure est défini par les caractéristiques du capteur LiDAR, notamment la distance focale, ainsi que par son orientation. Cette mesure, dépendante de la vitesse du vent, est un temps et dépend de l'orientation du capteur LiDAR.

Pour le cas étudié du LiDAR pulsé, les mesures sont obtenues successivement selon le maillage défini à l'étape précédente, en commençant par le faisceau longitudinal b0, puis le faisceau oblique b1, jusqu'au faisceau b4. Une caractéristique intéressante de ce système est qu'il permet de mesurer la projection de la vitesse du vent à plusieurs distances, simultanément, pour un faisceau donné. Il est ainsi possible d'obtenir, par exemple, 10 distances successives entre 50m et 400m, à un taux d'échantillonnage de 0.25Hz ou de 1 Hz. Il est bien sur possible de se limiter à deux mesures, qui sont suffisantes pour reconstruire un modèle en trois dimensions. A chaque temps d'échantillonnage, les seules mesures du faisceau courant sélectionné sont rafraîchies.

Dans un cas particulier, conforme à la figure 6, les mesures sont faites à sept distances et notamment à x= [50 80 120 160 200 240 280] m pour les cinq faisceaux. Ainsi pour chaque x fixé, le plan y - z est divisé en cellules comme suit :

• Les quatre premiers points (PM) correspondent aux coordonnées y - z des points de mesure pour les faisceaux 1, 2, 3, 4 de la distance x = 280m.

- Les quatre seconds points (PM1) correspondent aux coordonnées y - z des points de mesure pour les faisceaux 1, 2, 3, 4 de la distance x = 240m.
- Les quatre troisièmes points (PM2) correspondent aux coordonnées y - z des points de mesure pour les faisceaux 1, 2, 3, 4 de la distance x = 200m.

  - Les quatre quatrièmes points (PM3) correspondent aux coordonnées y - z des points de mesure pour les faisceaux 1, 2, 3, 4 de la distance x = 160m.
  - Les quatre cinquièmes points (PM4) correspondent aux coordonnées y - z des points de mesure pour les faisceaux 1, 2, 3, 4 de la distance x = 120m.
  - Les quatre sixièmes points (PM5) correspondent aux coordonnées y - z des points de mesure pour les faisceaux 1, 2, 3, 4 de la distance x = 80m.
  - Les quatre septièmes points (PM6) correspondent aux coordonnées y - z des points de mesure pour les faisceaux 1, 2, 3, 4 de la distance x = 50m.
  - Le point central (PM7) correspond aux coordonnées y - z des points de mesure pour le faisceau 0 pour toutes les distances.

Les mesures m(k) de LiDAR pour les faisceaux j = 0, 1, 2, 3, 4 à la distance x mètres, et à l'instant k sont données par la formule mj, x(k), avec j = 0, 1, 2, 3, 4.

Par exemple, $m_{0,50}(1)$ est la mesure de LiDAR pour le faisceau j = 0 à la distance x = 50 mètres et à l'instant instantané k = 1. Dans le cadre de l'invention, la mesure LiDAR est alors donnée par une formule du type :

$$m_{j,x}(k) = a_j v_{j,x}(k) + b_j v_{j,y}(k) + c_j v_{j,z}(k)$$

où $v_{j,x}(k)$, $v_{j,y}(k)$, $v_{j,z}(k)$ sont des valeurs de la vitesse du vent projetées sur un repère donné au temps initial (k), et $a_j$, $b_j$, $c_j$, avec j = 0, 1, 2, 3, 4 sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où 6j, φj, avec j = 0, 1, 2, 3, 4 sont respectivement le zénith et l'azimut de l'axe de mesure dans un système de coordonnée sphérique.

L'avantage de définir l'équation de mesure LiDAR dans le repère précédemment défini, avec le choix de discrétisation spatiale choisi, est que celle-ci peut être utilisée directement, puisque les coordonnées du point de mesure coïncident avec un point particulier de l'espace discrétisé.

3. Estimation (EST) de l'amplitude et de la direction du vent à un instant (t) quelconque sur l'ensemble des points discrétisés

Cette étape consiste à obtenir une valeur du vent sur les points d'estimation (PE) du maillage.

A cet effet l'estimation est effectuée au moyen de l'optimisation par une méthode de moindre carrés récursifs pondérés d'une fonction de coût qui utilise les données mesurées m(k) du LiDAR, mais aussi des données de cohérence spatiale de la vitesse du vent, des données de variation temporelle de la vitesse du vent, ainsi que des données qualifiant la qualité des mesures m(k) du LiDAR. C'est ce qui est explicité par la suite.

3.1 Différences spatiales

Ces sous sections visent à définir les données de cohérence spatiale du vent dans le cadre de l'invention et plus particulièrement dans le cadre d'un LiDAR monté sur la nacelle 3 d'une éolienne 1.

Dans cette étape, on considère les composantes de la vitesse du vent sur les axes x, y et z du repère précédemment défini.

Lors de cette étape d'estimation, il est admis que la vitesse du vent change relativement peu dans l'espace, et que le vent a une forte cohérence spatiale dans un faible volume de l'espace. L'exposé suivant est fait ici pour les composantes $v_x$, c'est-à-dire pour les premières n variables de w avec un domaine d'estimation représenté sur la figure 4 (L'approche est similaire pour les composantes $v_y$ et $v_z$) et en prenant $n_x = n_y = n_z = 3$.

### 3.1.1 Différence longitudinale

La différence longitudinale correspond au changement de $v_x$ le long de l'axe x et celui-ci change doucement selon l'invention. Dans ce cas la dérivée partielle $dv_x/dx$ est relativement petite. En d'autres termes,

$$\begin{cases} \omega_1 - \omega_{10} \approx 0 \\ \omega_2 - \omega_{11} \approx 0 \\ \vdots \\ \omega_{18} - \omega_{27} \approx 0 \end{cases}$$

L'équation précédente peut être écrite sous une forme vectorielle compacte comme :

$$C_{xl}\omega \approx 0$$

où

$$C_{xl} = \begin{bmatrix} +1 & 0 & \dots & 0 & -1 & 0 & \dots & 0 \\ 0 & +1 & \dots & 0 & 0 & -1 & \dots & 0 \\ \vdots & \vdots & \ddots & \vdots & \vdots & \vdots & \ddots & \vdots \\ 0 & 0 & \dots & +1 & 0 & 0 & \dots & -1 \end{bmatrix}$$

Il est à noter que chaque ligne de $C_{xl}$ contient un +1 et un -1.
De façon analogue, on peut calculer la variation de $v_y$ et $v_z$ le long de l'axe longitudinal comme :

$$\begin{cases} C_{yl}\omega \approx 0, \\ C_{zl}\omega \approx 0 \end{cases}$$

où $C_{yl}$, $C_{zl}$ sont, des matrices de coefficients, qui contiennent seulement un +1 et un -1 sur chaque ligne.
En définissant :

$$C_l = \begin{bmatrix} C_{xl} \\ C_{yl} \\ C_{zl} \end{bmatrix}$$

on obtient l'équation :

$$C_l\omega \approx 0$$

qui caractérise la variation de la vitesse du vent pour le domaine d'estimation le long de l'axe longitudinal.

3.1.2 Différence latérale

La différence latérale est le changement de $v_x$ le long de l'axe y. De façon analogue, puisque le vent change sans à-coup, la dérivée partielle $dv_x/dy$ est relativement petite. En d'autres termes,

$$\begin{cases} \omega_1 - \omega_2 \approx 0 \\ \omega_2 - \omega_3 \approx 0 \\ \vdots \\ \omega_{26} - \omega_{27} \approx 0 \end{cases}$$

On peut écrire l'équation précédente dans une forme vectorielle compacte comme

$$C_{xt}\omega \approx 0$$

où

$$C_{xt} = \begin{bmatrix} +1 & -1 & 0 & \dots & 0 & 0 & 0 & \dots & 0 & 0 \\ 0 & +1 & -1 & \dots & 0 & 0 & 0 & \dots & 0 & 0 \\ \vdots & \vdots & \vdots & \ddots & \vdots & \vdots & \vdots & \ddots & \vdots & \vdots \\ 0 & 0 & 0 & \dots & 0 & 0 & 0 & \dots & +1 & -1 \end{bmatrix}$$

Chaque ligne de $C_{xt}$ contient un +1 et un -1.

De façon analogue, la variation de $v_y$ et $v_z$ le long de l'axe latéral peut être calculée comme,

$$\begin{cases} C_{yt}\omega \approx 0, \\ C_{zt}\omega \approx 0 \end{cases}$$

où $C_{yt}$, $C_{zt}$ sont des matrices de coefficients qui ne contiennent qu'un +1 et un -1 pour chaque ligne.

En définissant :

$$C_t = \begin{bmatrix} C_{xt} \\ C_{yt} \\ C_{zt} \end{bmatrix}$$

Il est clair que l'équation :

$$C_t\omega \approx 0$$

caractérise la variation de la vitesse du vent pour le domaine d'estimation le long de l'axe latéral.

### 3.1.3 Différence verticale

Le profil vertical de la vitesse du vent est donné par une loi de puissance ce qui permet d'obtenir une description de la composante de vitesse du vent $v_x$ à différentes hauteurs qui est beaucoup plus précise.

Le profil vertical de la vitesse de vent décrit l'évolution de la vitesse de vent longitudinale en fonction de l'altitude relative au sol. La loi de puissance (« power law ») du profil de la vitesse du vent est généralement utilisée pour estimer la vitesse du vent longitudinal $v_l$ à une altitude au-dessus du sol $z$, compte tenu de la vitesse longitudinale du vent $v_{lr}$ à une altitude de référence $z_r$, en utilisant l'équation,

$$v_l = v_{lr} \left( \frac{z}{z_r} \right)^{\alpha}$$

où alpha est l'exposant de loi de puissance, qui est généralement spécifié en fonction de la stabilité.

La valeur constante alpha = 1/7 est couramment utilisée, en cohérence avec une hypothèse de cisaillement du vent relativement faible. Cependant, il faut noter que considérer alpha constant, revient à faire abstraction de la rugosité de la surface du sol, des interactions du vent avec d'éventuels obstacles, et de la stabilité de l'atmosphère.

En utilisant cette loi de puissance on a ainsi une différence verticale du vent donnée par :

$$\begin{cases} \omega_1 - \left( \frac{z_1}{z_4} \right)^{\alpha} \omega_4 \approx 0 \\ \omega_2 - \left( \frac{z_2}{z_5} \right)^{\alpha} \omega_5 \approx 0 \\ \vdots \\ \omega_{24} - \left( \frac{z_{24}}{z_{27}} \right)^{\alpha} \omega_{27} \approx 0 \end{cases}$$

où $z_j$ est la hauteur de $\omega$, $\alpha$ est l'exposant de loi de puissance, qui est supposé être 1/7. On peut écrire l'équation précédente dans une forme vectorielle compacte comme :

$$C_{xv} \omega \approx 0$$

où

$$C_{xv} = \begin{bmatrix} +1 & 0 & 0 & -\left(\frac{z_1}{z_4}\right)^{\alpha} & 0 & 0 & \dots & 0 & 0 & 0 & 0 \\ 0 & +1 & 0 & 0 & -\left(\frac{z_2}{z_5}\right)^{\alpha} & 0 & \dots & 0 & 0 & 0 & 0 \\ \vdots & \vdots & \vdots & \vdots & \vdots & \vdots & \ddots & \vdots & \vdots & \vdots & \vdots \\ 0 & 0 & 0 & 0 & 0 & 0 & \dots & +1 & 0 & 0 & -\left(\frac{z_{24}}{z_{27}}\right)^{\alpha} \end{bmatrix}$$

De façon analogue, on peut quantifier la variation de $v_y$ et $v_z$ le long de l'axe vertical comme

$$\begin{cases} C_{yv} \omega \approx 0, \\ C_{zv} \omega \approx 0 \end{cases}$$

Cependant, comme la loi de puissance du profil du vent ne s'applique qu'à la vitesse longitudinale du vent, $C_{yv}$, $C_{zv}$ ne contiennent qu'un +1 et un -1 pour chaque ligne.

En définissant :

$$C_v = \begin{bmatrix} C_{xv} \\ C_{yv} \\ C_{zv} \end{bmatrix}$$

On obtient l'équation :

$$C_v \omega \approx 0$$

qui caractérise la variation de la vitesse du vent pour le domaine d'estimation le long de l'axe vertical.

Enfin, en utilisant :

$$C_l \omega \approx 0$$

et

$$C_t \omega \approx 0$$

on a :

$$\begin{cases} C_l \omega \approx 0, \\ C_t \omega \approx 0, \\ C_v \omega \approx 0 \end{cases}$$

où de manière équivalente,

$$C_s \omega \approx 0$$

qui est l'équation qui caractérise la variation de la vitesse totale du vent le long de l'axe x, y et z.

Avec :

$$C_s = \begin{bmatrix} C_l \\ C_t \\ C_v \end{bmatrix}$$

3.2 Mesures LiDAR

Pour les besoins du calcul, il est important de réécrire l'équation de mesure sous forme vectorielle de W. Dans l'exemple précédent d'un LiDAR à cinq faisceaux et pour sept mesures par faisceaux, on a j = 0, 1, 2, 3, 4, et x =[50, 80, 120, 160, 200, 240, 280],

$$\begin{cases} v_{j,x} = \begin{bmatrix} 0 & \ldots & 0 & 1 & 0 & \ldots & 0 \end{bmatrix} \omega = C_{j,xx} \omega \\ v_{j,y} = \begin{bmatrix} 0 & \ldots & 0 & 1 & 0 & \ldots & 0 \end{bmatrix} \omega = C_{j,xy} \omega \\ v_{j,z} = \begin{bmatrix} 0 & \ldots & 0 & 1 & 0 & \ldots & 0 \end{bmatrix} \omega = C_{j,xz} \omega \end{cases}$$

En combinant avec :

$$m_{j,x}(k) = a_j v_{j,x}(k) + b_j v_{j,y}(k) + c_j v_{j,z}(k)$$

on obtient,

$$m_{j,x} = C_{j,x}\omega$$

où

$$C_{j,x} = \begin{bmatrix} a_j & b_j & c_j \end{bmatrix} \begin{bmatrix} C_{j,xx} \\ C_{j,xy} \\ C_{j,xz} \end{bmatrix}$$

que l'on peut réécrire sous une forme vectorielle compacte :

$$C_m\omega = m_m$$

où

$$m_m = \begin{bmatrix} m_{0,50} \\ m_{1,50} \\ \vdots \\ m_{4,280} \end{bmatrix}, \quad C_m = \begin{bmatrix} C_{0,50} \\ C_{1,50} \\ \vdots \\ C_{4,280} \end{bmatrix}$$

Pour prendre en compte les bruits de mesure, un modèle plus réaliste pour les mesures de Lidar peut être introduit comme suit,

$$C_m\omega = m_m + \epsilon_m$$

où $\epsilon_m$ décrit les bruits de mesure.

3.3 La méthode des moindres carrés récursifs pondérés

Il est admis que la vitesse du vent change peu non seulement dans l'espace, mais aussi dans le temps. Dans ce qui suit, on fournit un moyen de prendre en compte cette information dans l'approche par optimisation. $\hat{\omega}(0)$ est l'estimation de la vitesse du vent au temps 0. A chaque instant, le problème d'optimisation est le suivant :

$$\min_{\omega(t)} J(t)$$

avec

$$J(t) = (\omega(0) - \hat{\omega}(0))^T P_0^{-1}(\omega(0) - \hat{\omega}(0)) + \sum_{j=1}^{t} (\omega(j) - \omega(j-1))^T Q^{-1} (\omega(j) - \omega(j-1)) +$$
$$+ \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

Il existe quatre termes dans la fonction de coût précédente.

- Le premier terme pénalise la connaissance de la vitesse initiale du vent w(0).
- Le second terme pénalise la variation de la vitesse du vent dans le temps.
- Le troisième terme pénalise la variation de la vitesse du vent dans l'espace.
- Le quatrième terme pénalise la qualité de mesure Lidar.

En utilisant la formule précédente, on peut avoir une interprétation claire des matrices de pondération $P_0$, $Q$, $R_s$ et $R_m$. Ainsi :

- Si la vitesse du vent w(t) au temps t = 0 est bien connue, alors $\omega(0) = \hat{\omega}(0)$, alors $P_0$ est petit. Autrement $P_0$ est grand.
- S'il y a beaucoup de variations de la vitesse du vent dans le temps, alors $Q$ est grand. Autrement $Q$ est petit.
- Si la vitesse du vent change rapidement, alors $R_s$ est grand. Autrement $R_s$ est petit.
- S'il y a beaucoup de bruits dans les mesures Lidar, alors $R_m$ est grand. Sinon, $R_m$ est petit.

Dans le cas où l'on considère les trois cas limitatifs suivants :

- Aucune information sur la vitesse initiale du vent n'est disponible. Par conséquent $P_0$ est très grand. Le terme :

$$(\omega(0) - \hat{\omega}(0))^T P_0^{-1}(\omega(0) - \hat{\omega}(0))$$

peut ainsi être négligé dans la fonction de coût.

Il n'y a aucune relation entre la vitesse du vent à l'instant t et la vitesse du vent à l'instant t-1. Dans ce cas, on peut choisir $Q$ très grand. Le terme suivant peut être négligé :

$$\sum_{j=1}^{t} (\omega(j) - \omega(j-1))^T Q^{-1} (\omega(j) - \omega(j-1))$$

- La variation de la vitesse du vent dans l'espace est très faible. Dans ce cas, on peut prendre $R_s$ très petit. Le terme suivant est important dans la fonction de coût :

$$\sum_{j=1}^{t} \omega(j)^T C_s^T R_s^{-1} C_s \omega(j)$$

On définit :

$$C = \begin{bmatrix} C_s \\ C_m \end{bmatrix}, \quad R = \begin{bmatrix} R_s & 0 \\ 0 & R_m \end{bmatrix}$$

La méthode des moindres carrés récursifs pondérés utilisée pour résoudre le problème d'optimisation se présente de la façon suivante :

- On initialise les variables d'optimisation de la manière suivante :

$$\begin{cases} \omega(0) = \hat{\omega}(0), \\ P(0) = P_0 \end{cases}$$

- À chaque instant t :

  ▪ on définit :

$$y(t) = \begin{bmatrix} 0 \\ y_m(t) \end{bmatrix}$$

où 0 est un vecteur nul de dimension appropriée.
  ▪ On calcule une matrice auxiliaire *K* telle que

$$K = (P(t-1) + Q)C(C^T(P(t-1) + Q)C + R)^{-1}$$

  ▪ On calcule la matrice *P(t)* telle que

$$P(t) = (I - KC)P(t-1)$$

où *I* est une matrice d'identité de dimension appropriée.
  ▪ La vitesse du vent à l'instant t est alors estimée ainsi :

$$\omega(t) = \omega(t-1) + K(y(t) - C\omega(t-1))$$

4. Reconstruction du champ de vent incident en trois dimensions (3D) et en temps réel

Dans cette étape, un processeur intégré au capteur LiDAR récupère l'ensemble des données d'amplitude et de direction du vent mesurées et estimées durant les étapes précédentes. La récupération de ces données se fait en temps réel pour chaque point de mesure (PM) et d'estimation (PE) définis précédemment. Ainsi le capteur LiDAR est en mesure de reconstruire l'ensemble du champ de vent incident sur le LiDAR comme visible à la figure 7.

Sur la même figure 7, un champ de vent reconstruit est représenté pour un temps à 68 secondes. En ordonnée, il est représenté l'altitude relative au sol (en m) et en abscisse il est représenté la distance à la nacelle (en m) et les positions relatives latérales au LiDAR (en m).

L'invention concerne en second lieu un procédé de contrôle et/ou de surveillance d'une éolienne équipée avec un capteur LiDAR tel que décrit précédemment et un automate de pilotage 10 afférent qui comprend les étapes suivantes :

i) Une étape d'élaboration d'une stratégie de contrôle (CON) par anticipation de ladite éolienne 1 en exploitant la reconstruction du champ de vent incident en trois dimensions et en temps réel obtenu par le procédé selon l'invention,
ii) Une étape de pilotage (PIL) intégrant la stratégie de contrôle élaborée qui consiste notamment à piloter l'angle des pâles 7 ou l'orientation de la nacelle 3.

La figure 8 représente le fonctionnement global d'une telle éolienne 1. L'éolienne 1 comprend à cet effet un capteur LiDAR 2 conforme à l'invention, et son unité de traitement, un dispositif informatique comprenant une solution logicielle de reconstruction 3D du champ de vent, un automate de pilotage intégrant la stratégie de contrôle et un dispositif de pilotage des pales et/ou de la nacelle de l'éolienne. En lien avec la figure 8, l'invention appliquée à une éolienne fonctionne de la manière suivante :

- Premièrement, le LiDAR effectue l'étape d'acquisition et de modélisation du champ de vent incident telle que décrite précédemment de manière à reconstruire un champ de vent incident 3D (étapes ME, MA, EST, MOD 3D de la figure 8),

- Deuxièmement, l'automate de pilotage 10 élabore la stratégie de contrôle (CON) et effectue le pilotage (PIL) des organes de l'éolienne 1 en tenant compte de la stratégie de contrôle élaborée.

Ce procédé selon l'invention permet d'analyser en temps réel le vent incident ou détecter des rafales, des courbes de puissance et des intensités de turbulence ce qui peut servir à réguler ou superviser l'éolienne de manière à obtenir un meilleur alignement de l'éolienne, ce qui conduit à une optimisation de la production et une minimisation des charges et de la fatigue.

## Revendications

1. Procédé de détection de valeurs aberrantes d'un champ de vent incident dans un espace situé en amont d'un capteur LiDAR **caractérisé en ce que** le procédé comprend :

   a) Une étape d'acquisition et de modélisation de mesures $rws(k)$ par le capteur LiDAR d'un champ de vent incident ;
   b) Une étape d'estimation d'une médiane $mr(k)$ et de l'écart absolu moyen $dr(k)$ en temps réel de modélisation des mesures $rws(k)$ du champ de vent incident ; et
   c) Une étape de détection des valeurs aberrantes en temps réel en utilisant la médiane estimée $mr(k)$ et l'écart absolu moyen $dr(k)$, ladite étape de détection est réalisée par une formule du type : $|rws(k) - mr(k)| \leq \sigma dr(k)$ où $\sigma$ est un scalaire positif.

2. Procédé de détection selon la revendication 1 **caractérisé en ce que** l'écart absolu moyen $dr(k)$ en temps réel du

$$d_r = \frac{1}{n} \sum_{i=1}^{n} |x_i - m(X)|$$

   champ de vent incident est donné par une formule du type :                dans laquelle m(X) représente la médiane des mesures, xi représente chaque mesure, n le nombre de mesures.

3. Procédé de détection selon l'une des revendications précédentes, **caractérisé en ce que** le procédé comporte une étape de reconstruction de la mesure dudit capteur LiDAR, par suppression desdites valeurs aberrantes détectées de ladite modélisation de mesure $rws(k)$.

4. Procédé de détection selon l'une des revendications précédentes, **caractérisé en ce que** l'étape d'acquisition et de modélisation par le capteur LiDAR d'un champ de vent incident dans l'espace situé en amont dudit capteur LiDAR comprend les étapes suivantes :

   a) une étape de maillage (MA) de l'espace situé en amont dudit capteur LiDAR dans laquelle le maillage de l'espace est réalisé par un ensemble de points discrétisés positionnés selon une grille tridimensionnelle prédéfinie qui comprend un ensemble de mailles composées de points d'estimation et de points de mesure (PM),
   b) une étape de mesure (MES) de l'amplitude et de la direction du vent aux différents points de mesure (PM) situés dans l'espace en amont et positionnés à au moins deux distances distinctes du capteur LiDAR, le long d'au moins trois axes de mesure,
   c) une étape d'estimation (EST) de l'amplitude et de la direction du vent à un instant (t) quelconque sur l'ensemble des points d'estimation et l'estimation est effectuée au moyen de l'optimisation par une méthode de moindre carrés récursifs pondérés d'une fonction de coût qui utilise au moins les données des points de mesure (PM), des données de cohérence spatiale de la vitesse du vent, des données de cohérence temporelle de la vitesse du vent, ainsi que des données qualifiant la qualité des mesures effectuées sur les points de mesure,
   d) une étape de reconstruction (MOD 3D), en temps réel et dans un repère défini, du champ de vent incident en trois dimensions (3D) à partir des amplitudes et des directions du vent estimées et mesurées pour chaque point dudit maillage (MA).

5. Procédé de détection selon la revendication 4, **caractérisé en ce que** la mesure m de l'amplitude et de la direction du vent en un point de mesure (PM) est donnée par une relation de la forme :

$$m_{j,x}(k) = a_j v_{j,x}(k) + b_j v_{j,y}(k) + c_j v_{j,z}(k)$$

où $v_{j,x}(k)$, $v_{j,y}(k)$, $v_{j,z}(k)$ sont des valeurs de la vitesse du vent projetées sur un repère donné au temps initial (k), et $a_j$, $b_j$, $c_j$ avec j = 0, 1, 2, 3, 4 sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où $\theta j$, $\varphi j$, j = 0, 1, 2, 3, 4 sont respectivement le zénith et l'azimut de l'axe de mesure dans un système de coordonnée sphérique.

6. Procédé de détection selon l'une des revendications 4 ou 5, **caractérisé en ce que** la fonction de cout $J$ à un instant (t) quelconque s'écrit sous la forme suivante :

$$J(t) = (\omega(0) - \hat{\omega}(0))^T P_0^{-1}(\omega(0) - \hat{\omega}(0)) + \sum_{j=1}^{t}(\omega(j) - \omega(j-1))^T Q^{-1}(\omega(j) - \omega(j-1)) +$$
$$+ \sum_{j=1}^{t}\omega(j)^T C_s^T R_s^{-1} C_s\omega(j) + \sum_{j=1}^{t}(C_m\omega(j) - m_m)^T R_m^{-1}(C_m\omega(j) - m_m(j))$$

dans laquelle w est un vecteur ordonné composé de toutes les composantes de la vitesse des points de l'espace où le vent est estimé, $\hat{\omega}(0)$ est l'estimation de la vitesse du vent au temps 0, $P_0$, Q, $R_s$ et $R_m$ sont des matrices de pondération de dimension appropriée, et $C_s$, $C_m$ sont des matrices qui prennent en compte la vitesse du vent et les bruits de mesure.

7. Procédé de détection selon l'une des revendications 4 à 6, **caractérisé en ce que** les mesures de l'amplitude et de la direction du vent aux différents points de mesure (PM) s'effectue à un taux d'échantillonnage d'au moins 0.25Hz.

8. Procédé de détection selon l'une des revendications 4 à 7, **caractérisé en ce que** les mesures de l'amplitude et de la direction du vent aux différents points de mesure (PM) sont prises à au moins deux distances différentes le long de l'axe de mesure.

9. Procédé de détection selon l'une des revendications 4 à 8, **caractérisé en ce que** les mesures de l'amplitude et de la direction du vent sont prises le long d'au moins trois axes de mesure.

10. Procédé de détection selon l'une des revendications 4 à 9, **caractérisé en ce que** la cohérence spatiale de la vitesse du vent suivant des axes x, y et z d'un repère cartésien est estimée par une formule du type:

$$C_s\omega \approx 0$$

Avec

$$C_s = \begin{bmatrix} C_l \\ C_t \\ C_v \end{bmatrix}$$

où :

- ◦ $C_l$ caractérise la variation de la vitesse du vent pour un domaine d'estimation le long de l'axe longitudinal x et
- ◦ $C_t$ caractérise la variation de la vitesse du vent pour un domaine d'estimation le long de l'axe latéral y et
- ◦ $C_v$ caractérise la variation de la vitesse du vent pour un domaine d'estimation le long de l'axe vertical z et
- o le vecteur w est un vecteur ordonné composé de toutes les composantes de la vitesse du vent aux points de l'espace où le vent est estimé.

**11.** Procédé de détection selon l'une des revendications 4 à 10, **caractérisé en ce que** la cohérence spatiale de la vitesse du vent suivant les axes x, y et z du repère cartésien est estimée avec les hypothèses suivantes :

○ La variation de la vitesse du vent le long de l'axe longitudinal x est faible et la dérivée partielle $dv_x/dx$ est relativement petite le long de l'axe longitunal,
○ le vent change sans à-coup le long de l'axe latéral y et la dérivée partielle $dv_x/dy$ est petite le long de l'axe latéral y,
o le vent change avec une loi de puissance suivant l'axe vertical z qui est donnée par :

$$v_l = v_{lr} \left( \frac{z}{z_r} \right)^{\alpha}$$

où alpha est un exposant de la loi de puissance, $v_l$ est le vent longitudinal à une altitude z au-dessus du sol, et $z_r$ une altitude de référence.

**12.** Procédé de détection selon l'une des revendications 4 à 11, **caractérisé en ce que** la qualité des mesures effectuées par le capteur LiDAR est représentée par un modèle de la forme :

$$C_m \omega = m_m + \epsilon_m$$

Où $E_m$ décrit les bruits de mesure.

**13.** Procédé de détection selon l'une des revendications 4 à 12, **caractérisé en ce que** l'estimation des amplitudes et des directions du champ de vent à un instant (t) sur l'ensemble des points d'estimation est donnée par la formule suivante :

$$\omega(t) = \omega(t-1) + K(y(t) - C\omega(t-1))$$

**14.** Produit programme d'ordinateur **caractérisé en ce qu'**il comprend des instructions de code agencées pour mettre en oeuvre les étapes d'un procédé de détection par un capteur LiDAR d'un champ de vent incident selon l'une des revendications précédentes, lorsque ledit programme est exécuté sur une unité de traitement dudit capteur LiDAR.

**15.** Capteur LiDAR **caractérisé en ce qu'**il comprend en mémoire les instructions de code d'un produit programme d'ordinateur selon la revendication précédente et agencé pour exécuter un tel produit programme d'ordinateur.

**16.** Éolienne 1 **caractérisée en ce que** ladite éolienne 1 comprend un capteur LiDAR 2 selon la revendication précédente.

**17.** Éolienne 1 selon la revendication précédente **caractérisé en ce que** ledit capteur LiDAR est disposé sur la nacelle de ladite éolienne.

**18.** Procédé de contrôle et/ou de surveillance d'une éolienne 1 équipée avec un capteur LiDAR 2 et un automate de pilotage, **caractérisé en ce qu'**on réalise les étapes suivantes

i) Une étape de détection de valeurs aberrantes d'un champ de vent incident dans un espace situé en amont d'un capteur LiDAR et une étape selon l'une des revendications 1 à 13,
ii) Une étape de pilotage (PIL) intégrant la stratégie de contrôle élaborée qui consiste à piloter l'angle de pâles 7 ou l'orientation d'une nacelle 3 en ne prenant pas en compte lesdites valeurs aberrantes détectées.

**Patentansprüche**

**1.** Verfahren zur Erkennung von Ausreißern eines ankommenden Windfelds in einem einem LiDAR-Sensor vorgelagerten Raum, **dadurch gekennzeichnet, dass** das Verfahren enthält:

a) einen Schritt der Erfassung und Modellierung von Messungen rws(k) eines ankommenden Windfelds durch den LiDAR-Sensor;

b) einen Schritt der Schätzung eines Medianwerts mr(k) und der mittleren absoluten Abweichung dr(k) in Echtzeit einer Modellierung der Messungen rws(k) des ankommenden Windfelds; und

c) einen Schritt der Erkennung der Ausreißer in Echtzeit unter Verwendung des geschätzten Medianwerts mr(k) und der mittleren absoluten Abweichung d(rk), wobei der Erkennungsschritt durch eine Formel des Typs: |rws(k) -mr(k)| ≤ σdr(k) durchgeführt wird, wobei σ ein positiver Skalar ist.

2. Erkennungsverfahren nach Anspruch 1, **dadurch gekennzeichnet, dass** die mittlere absolute Abweichung dr(k) in Echtzeit des ankommenden Windfelds durch eine Formel des Typs angegeben wird:

$$d_r = \frac{1}{n} \sum_{i=1}^{n} |x_i - m(X)|$$

in der m(X) den Medianwert der Messungen darstellt, xi jede Messung darstellt, n die Anzahl von Messungen.

3. Erkennungsverfahren nach einem der vorhergehenden Ansprüche, **dadurch gekennzeichnet, dass** das Verfahren einen Schritt der Rekonstruktion der Messung des LiDAR-Sensors durch Entfernen der erkannten Ausreißer der Messmodellierung rws(k) aufweist.

4. Erkennungsverfahren nach einem der vorhergehenden Ansprüche, **dadurch gekennzeichnet, dass** der Schritt der Erfassung und Modellierung durch den LiDAR-Sensor eines ankommenden Windfelds in dem dem LiDAR-Sensor vorgelagerten Raum die folgenden Schritte enthält:

a) einen Schritt der Vermaschung (MA) des dem LiDAR-Sensor vorgelagerten Raums, wobei die Vermaschung des Raums von einer Einheit von diskretisierten Punkten durchgeführt wird, die gemäß einem vordefinierten dreidimensionalen Gitter positioniert sind, das eine Einheit von Maschen enthält, die aus Schätzpunkten und Messpunkten (PM) zusammengesetzt sind,

b) einen Messschritt (MES) der Amplitude und der Richtung des Winds an den verschiedenen Messpunkten (PM), die sich im vorgelagerten Raum befinden und in mindestens zwei unterschiedlichen Abständen zum LiDAR-Sensor entlang mindestens drei Messachsen positioniert sind,

c) einen Schätzschritt (EST) der Amplitude und der Richtung des Winds zu einem beliebigen Zeitpunkt (t) an der Gesamtheit der Schätzpunkte, und die Schätzung wird mittels der Optimierung durch eine Methode der gewichteten rekursiven kleinsten Quadrate einer Kostenfunktion ausgeführt, die mindestens die Daten der Messpunkte (PM), Daten räumlicher Kohärenz der Windgeschwindigkeit, Daten zeitlicher Kohärenz der Windgeschwindigkeit, sowie Daten verwendet, die die Qualität der an den Messpunkten ausgeführten Messungen qualifizieren,

d) einen Schritt der Rekonstruktion (MOD 3D), in Echtzeit und in einem definierten Bezugssystem, des ankommenden Windfelds in drei Dimensionen (3D) ausgehend von den für jeden Punkt der Vermaschung (MA) geschätzten und gemessenen Amplituden und Richtungen des Winds.

5. Erkennungsverfahren nach Anspruch 4, **dadurch gekennzeichnet, dass** die Messung der Amplitude und der Richtung des Winds an einem Messpunkt (PM) durch eine Beziehung der Form gegeben wird:

$$m_{j,x}(k) = a_j v_{j,x}(k) + b_j v_{j,y}(k) + c_j v_{j,z}(k)$$

wobei $v_{j,x}(k)$, $v_{j,y}(k)$, $v_{j,z}(k)$ Werte der Windgeschwindigkeit projiziert auf ein gegebenes Bezugssystem zur Anfangszeit (k) sind, und $\alpha_j$, $b_j$, $c_j$ mit j = 0, 1, 2, 3, 4 Messkoeffizienten sind, die angegeben werden als

$$\begin{cases} a_j = cos(\theta_j), \\ b_j = sin(\theta_j)cos(\varphi_j), \\ c_j = sin(\theta_j)sin(\varphi_j) \end{cases}$$

wobei $\theta_j$, $\varphi_j$, j = 1, 2, 3, 4 der Zenit bzw. der Azimut der Messachse in einem sphärischen Koordinatensystem sind.

6. Erkennungsverfahren nach einem der Ansprüche 4 oder 5, **dadurch gekennzeichnet, dass** die Kostenfunktion J zu einem beliebigen Zeitpunkt (t) folgendermaßen geschrieben wird:

$$
\begin{aligned}
J(t) = {}& \big(\omega(0) - \widehat{\omega}(0)\big)^T P_0^{-1}\big(\omega(0) - \widehat{\omega}(0)\big) \\
& + \sum_{j-1}^{t} \big(\omega(j) - \omega(j-1)\big)^T Q^{-1}\big(\omega(j) - \omega(j-1)\big) \\
& + \sum_{j=1}^{t} \omega(j)^T C_s^T R_s^{-1} C_s \omega(j) \\
& + \sum_{j=1}^{t} \big(C_m \omega(j) - m_m\big)^T R_m^{-1}\big(C_m \omega(j) - m_m(j)\big)
\end{aligned}
$$

wobei $\omega$ ein geordneter Vektor ist, der aus allen Komponenten der Geschwindigkeit der Punkte des Raums zusammengesetzt ist, wo der Wind geschätzt wird, $\widehat{\omega}(0)$ die Schätzung der Windgeschwindigkeit zum Zeitpunkt 0 ist, $P_0$, Q, $R_s$ und $R_m$ Gewichtungsmatrizen geeigneter Abmessung sind, und $C_s$, $C_m$ Matrizen sind, die die Windgeschwindigkeit und das Messrauschen berücksichtigen.

7. Erkennungsverfahren nach einem der Ansprüche 4 bis 6, **dadurch gekennzeichnet, dass** die Messungen der Amplitude und der Richtung des Winds an den verschiedenen Messpunkten (PM) mit einer Abtastrate von mindestens 0.25Hz ausgeführt werden.

8. Erkennungsverfahren nach einem der Ansprüche 4 bis 7, **dadurch gekennzeichnet, dass** die Messungen der Amplitude und der Richtung des Winds an den verschiedenen Messpunkten (PM) in mindestens zwei verschiedenen Abständen entlang der Messachse vorgenommen werden.

9. Erkennungsverfahren nach einem der Ansprüche 4 bis 8, **dadurch gekennzeichnet, dass** die Messungen der Amplitude und der Richtung des Winds entlang von mindestens drei Messachsen vorgenommen werden.

10. Erkennungsverfahren nach einem der Ansprüche 4 bis 9, **dadurch gekennzeichnet, dass** die räumliche Kohärenz der Windgeschwindigkeit gemäß den Achsen x, y und z eines kartesischen Koordinatensystems durch eine Formel des Typs geschätzt wird:

$$
C_s \omega \approx 0
$$

mit

$$
C_s = \begin{bmatrix} C_l \\ C_t \\ C_v \end{bmatrix}
$$

wobei:

    o $C_i$ die Änderung der Windgeschwindigkeit für einen Schätzbereich entlang der Längsachse x charakterisiert, und

    o $C_t$ die Änderung der Windgeschwindigkeit für einen Schätzbereich entlang der Seitenachse y charakterisiert, und

    ◦ $C_v$ die Änderung der Windgeschwindigkeit für einen Schätzbereich entlang der senkrechten Achse z charakterisiert, und

    ◦ der Vektor $\omega$ ein geordneter Vektor ist, der aus allen Komponenten der Windgeschwindigkeit an den Punkten des Raums zusammengesetzt ist, wo der Wind geschätzt wird.

11. Erkennungsverfahren nach einem der Ansprüche 4 bis 10, **dadurch gekennzeichnet, dass** die räumliche Kohärenz der Windgeschwindigkeit gemäß den Achsen x, y und z des kartesischen Koordinatensystems mit den folgenden Hypothesen geschätzt wird:

   o die Änderung der Windgeschwindigkeit entlang der Längsachse x ist schwach, und die partielle Ableitung $dv_x/dx$ entlang der Längsachse ist relativ klein,
   o der Wind ändert sich stufenlos entlang der Seitenachse y, und die partielle Ableitung $dv_x/dy$ entlang der Seitenachse y ist klein,
   o der Wind ändert sich mit einem Leistungsgesetz gemäß der senkrechten Achse z, das gegeben wird durch:

$$v_l = v_{lr} \left( \frac{z}{z_r} \right)^a$$

   wobei Alpha ein Exponent des Leistungsgesetzes ist, vi der Längswind auf einer Höhe z über dem Boden und $z_r$ eine Bezugshöhe ist.

12. Erkennungsverfahren nach einem der Ansprüche 4 bis 11, **dadurch gekennzeichnet, dass** die Qualität der vom LiDAR-Sensor ausgeführten Messungen durch ein Modell der Form dargestellt wird:

$$C_m \omega = m_m + \epsilon_m$$

   wobei $E_m$ das Messrauschen beschreibt.

13. Erkennungsverfahren nach einem der Ansprüche 4 bis 12, **dadurch gekennzeichnet, dass** die Schätzung der Amplituden und der Richtungen des Windfelds zu einem Zeitpunkt (t) über die Gesamtheit der Schätzpunkte durch die folgende Formel angegeben wird:

$$\omega(t) = \omega(t-1) + K\big(y(t) - C\omega(t-1)\big)$$

14. Computerprogrammprodukt, **dadurch gekennzeichnet, dass** es Codeanweisungen enthält, die eingerichtet sind, um die Schritte eines Erkennungsverfahrens eines ankommenden Windfelds durch einen LiDAR-Sensor nach einem der vorhergehenden Ansprüche durchzuführen, wenn das Programm auf einer Verarbeitungseinheit des LiDAR-Sensors ausgeführt wird.

15. LiDAR-Sensor, **dadurch gekennzeichnet, dass** er im Speicher die Codeanweisungen eines Computerprogrammprodukts nach dem vorhergehenden Anspruch enthält und eingerichtet ist, um ein solches Computerprogrammprodukt auszuführen.

16. Windkraftanlage 1, **dadurch gekennzeichnet, dass** die Windkraftanlage 1 einen LiDAR-Sensor 2 nach dem vorhergehenden Anspruch enthält.

17. Windkraftanlage 1 nach dem vorhergehenden Anspruch, **dadurch gekennzeichnet, dass** der LiDAR-Sensor auf der Gondel der Windkraftanlage angeordnet ist.

18. Verfahren zur Kontrolle und/oder Überwachung einer Windkraftanlage 1, die mit einem LiDAR-Sensor 2 und einem Steuerautomaten ausgestattet ist, **dadurch gekennzeichnet, dass** die folgenden Schritte durchgeführt werden:

   i) ein Schritt der Erkennung von Ausreißern eines ankommenden Windfelds in einem einem LiDAR-Sensor vorgelagerten Raum und einen Schritt nach einem der Ansprüche 1 bis 13,
   ii) einen Steuerschritt (PIL), der die ausgearbeitete Kontrollstrategie umfasst, die darin besteht, den Winkel von Blättern 7 oder die Ausrichtung einer Gondel 3 ohne Berücksichtigung der erkannten Ausreißer zu steuern.

**Claims**

1. Method for detecting aberrant values of an incident wind field in a space located upstream of a lidar sensor, **characterized in that** the method comprises:

   a) A step of acquiring and modelling measurements *rws(k)* with the lidar sensor of an incident wind field;
   b) A step of estimating a median *mr(k)* and the mean absolute deviation *dr(k)* in real time of modelled measurements *rws(k)* of the incident wind field; and
   c) A step of detecting aberrant values in real time using the estimated median *mr(k)* and the mean absolute deviation *dr(k)*, said detecting step being carried out with a formula of the type: $|rws(k) - mr(k)| \leq \sigma dr(k)$ where $\sigma$ is a positive scalar.

2. Detecting method according to Claim 1, **characterized in that** the mean absolute deviation *dr(k)* in real time of the incident wind field is given by a formula of the type:

$$d_r = \frac{1}{n} \sum_{i=1}^{n} |x_i - m(X)|$$

in which m(X) represents the median of the measurements, $x_i$ represents each measurement and n represents the number of measurements.

3. Detecting method according to either of the preceding claims, **characterized in that** the method comprises a step of reconstructing the measurement of said lidar sensor, by removing said detected aberrant values from said modelled measurement *rws(k)*.

4. Detecting method according to one of the preceding claims, **characterized in that** the step of acquiring and modelling with the lidar sensor an incident wind field in the space located upstream of said lidar sensor comprises the following steps:

   a) a step of generating a mesh (MA) of the space located upstream of said lidar sensor, in which step the mesh of the space is generated using a set of discrete points positioned in a predefined three-dimensional grid that comprises a set of cells composed of estimation points and of measurement points (PM),
   b) a step of measuring (MES) the amplitude and direction of the wind at the various measurement points (PM) located in the upstream space and positioned at at least two different distances from the lidar sensor, along at least three measurement axes,
   c) a step of estimating (EST) the amplitude and the direction of the wind at any time (t) at all of the estimation points, the estimation being carried out by means of the optimization, using a weighted recursive least-squares method, of a cost function that uses at least the data of the measurement points (PM), spatial wind-speed coherence data, temporal wind-speed coherence data, and data qualifying the quality of the measurements carried out at the measurement points,
   d) a step of reconstructing (MOD 3D), in real time and in a defined coordinate system, the incident wind field in three dimensions (3D) from the wind amplitudes and directions estimated and measured for each point of said mesh (MA).

5. Detecting method according to Claim 4, **characterized in that** the measurement m of the amplitude and of the direction of the wind at a measurement point (PM) is given by a relationship of the form:

$$m_{j,x}(k) = a_j v_{j,x}(k) + b_j v_{j,y}(k) + c_j v_{j,z}(k)$$

where $v_{j,x}(k)$, $v_{j,y}(k)$, $v_{j,z}(k)$ are wind-speed values projected into a given coordinate system at the initial time (k), and $a_j$, $b_j$, $c_j$ with j = 0, 1, 2, 3, 4 are measurement coefficients, which are given by

$$\begin{cases} a_j = \cos(\theta_j), \\ b_j = \sin(\theta_j)\cos(\varphi_j), \\ c_j = \sin(\theta_j)\sin(\varphi_j) \end{cases}$$

where $\theta_j$, $\varphi_j$, $j$ = 0, 1, 2, 3, 4 are, respectively, the zenith and the azimuth of the measurement axis in a spherical coordinate system.

6. Detecting method according to either of Claims 4 and 5, **characterized in that** the cost function J at any time (t) is written in the following form:

$$J(t) = (\omega(0) - \hat{\omega}(0))^T P_0^{-1}(\omega(0) - \hat{\omega}(0)) + \sum_{j=1}^t (\omega(j) - \omega(j-1))^T Q^{-1}(\omega(j) - \omega(j-1)) +$$
$$+ \sum_{j=1}^t \omega(j)^T C_s^T R_s^{-1} C_s \omega(j) + \sum_{j=1}^t (C_m \omega(j) - m_m)^T R_m^{-1}(C_m \omega(j) - m_m(j))$$

in which w is an ordered vector composed of all the components of the speed at the points of the space at which the wind is estimated, $\hat{\omega}(0)$ is the estimation of the wind speed at the time 0, $P_0$, $Q$, $R_s$ and $R_m$ are weighting matrices of suitable size, and $C_s$, $C_m$ are matrices that take into account the wind speed and the measurement noise.

7. Detecting method according to one of Claims 4 to 6, **characterized in that** the measurements of the amplitude and direction of the wind at the various measurement points (PM) are carried out at a sampling rate of at least 0.25 Hz.

8. Detecting method according to one of Claims 4 to 7, **characterized in that** the measurements of the amplitude and direction of the wind at the various measurement points (PM) are carried out at at least two different distances along the measurement axis.

9. Detecting method according to one of Claims 4 to 8, **characterized in that** the measurements of the amplitude and direction of the wind are taken along at least three measurement axes.

10. Detecting method according to one of Claims 4 to 9, **characterized in that** the spatial coherence of the wind speed along the x, y and z axes of a Cartesian coordinate system is estimated using a formula of the type:

$$C_s \omega \approx 0$$

with:

$$C_s = \begin{bmatrix} C_l \\ C_t \\ C_v \end{bmatrix}$$

where:

o Ci characterizes the variation in the wind speed for an estimation domain along the longitudinal axis x and
o Ct characterizes the variation in the wind speed for an estimation domain along the lateral axis y and
○ $C_v$ characterizes the variation in the wind speed for an estimation domain along the vertical axis z and
○ the vector $\omega$ is an ordered vector composed of all the components of the wind speed at the points of the space at which the wind is estimated.

11. Detecting method according to one of Claims 4 to 10, **characterized in that** the spatial coherence of the wind speed along the x, y and z axes of the Cartesian coordinate system is estimated under the following assumptions:

o The variation in the wind speed along the longitudinal axis x is small and the partial derivative $dv_x/dx$ is relatively

small along the longitudinal axis,
o the wind changes without discontinuity along the lateral axis y and the partial derivative $dv_x/dy$ is small along the lateral axis y,
o the wind changes along the vertical axis z according to a power law, which is given by:

$$v_l = v_{lr} \left( \frac{z}{z_r} \right)^\alpha$$

where alpha is an exponent of the power law, $v_l$ is the longitudinal wind at an altitude z above the ground, and $z_r$ a reference altitude.

12. Detecting method according to one of Claims 4 to 11, **characterized in that** the quality of the measurements carried out by the lidar sensor is represented using a model of the form:

$$C_m \omega = m_m + \epsilon_m$$

Where $E_m$ describes the measurement noise.

13. Detecting method according to one of Claims 4 to 12, **characterized in that** the estimation of the amplitudes and of the directions of the wind field at a time (t) at all of the estimation points is given by the following formula:

$$\omega(t) = \omega(t-1) + K(y(t) - C\omega(t-1))$$

14. Computer-program product **characterized in that** it comprises code instructions arranged to implement the steps of a method for detecting with a lidar sensor an incident wind field according to one of the preceding claims, when said program is executed by a processing unit of said lidar sensor.

15. Lidar sensor **characterized in that** it comprises in memory the code instructions of a computer-program product according to the preceding claim and arranged to execute such a computer-program product.

16. Wind turbine 1 **characterized in that** said wind turbine 1 comprises a lidar sensor 2 according to the preceding claim.

17. Wind turbine 1 according to the preceding claim, **characterized in that** said lidar sensor is placed on the nacelle of said wind turbine.

18. Method for controlling and/or monitoring a wind turbine 1 equipped with a lidar sensor 2 and a programmable logic controller, **characterized in that** the following steps are carried out:

   i) A step of detecting aberrant values of an incident wind field in a space located upstream of a lidar sensor and a step according to one of Claims 1 to 13,
   ii) A step of control (PIL), incorporating the generated control strategy, which consists in controlling the angle of the blades 7 or the orientation of a nacelle 3 while not taking into account said detected aberrant values.

[Fig 1]

[Fig 2]

[Fig 3]

[Fig 4]

[Fig 5]

[Fig 6]

[Fig 7]

[Fig 8]

MES

MA

EST

MOD 3D

CON → PIL

10

2

PM

1

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777

- US 2015145253 A

**Littérature non-brevet citée dans la description**

- **ADCOCK CHISTIANE et al.** Data-driven wind farm optimization incorparating effects of turbulence intensité. *ANNUAL AMERICAN CONTROL CONFERENCE (ACC), AACC,* 27 Juin 2018, 695-700